# EUROPEAN PATENT APPLICATION

(11) **EP 2 853 152 A1**
(43) Date of publication of application: **01.04.2015**
(21) Application number: 14183920.9
(22) Date of filing: 08.09.2014
(51) Int. Cl.: A01G 23/00

(54) **A forwarder and a method for timber handling**

(30) Priority: 27.09.2013 SE 1351119
(71) Applicant: Helsinge Skog Innovation AB, 820 40 Järvsö (SE)
(72) Inventor: Larsson, Peter, SE-820 40 Järvsö (SE); Axelsson, Per, SE-820 60 Delsbo (SE)
(74) Representative: Olsson, Jan

(57) **Abstract**

A forwarder comprises a load space and a crane with a gripping assembly (6) for lifting timber pieces from the ground and placing them in the load space. The gripping assembly has gripping members (7, 8) and at least one additional gripping arm (13, 14). The gripping assembly is controllable to, when gripping timber pieces, firstly grip timber pieces of a first assortment through said at least one additional gripping arm and then grip timber pieces of a second assortment by said gripping members while holding the timber pieces of the first assortment in a separate space (17).

## Description

The present invention relates to a forwarder and a method for handling timber pieces according to the preambles of the appended independent claims.

When logging according to the short-length method, which is mostly done by a forestry harvester, a forwarder is used to pick up the timber pieces dropped on the ground during the logging. A forwarder is a vehicle provided with a crane with a gripping assembly and a load space for receiving and transport of timber pieces lifted through the gripping assembly. The forwarder transports the timber pieces to a drop-off location, a so-called log yard, for example at a forest road, where they are unloaded from the load space for subsequent pick up by for example a timber truck.

The timber pieces as a result of the logging which are to be picked up by the gripping assembly of the forwarder may be placed in piles according to different assortments, e.g. spruce timber, pinewood timber and birch timber of various dimensions and lengths and softwood pulp and birch pulp, but a large amount of additional assortments are possible. This dividing into assortments done in connection with the logging is done so that subsequent loading of the timber pieces on a timber truck at said log yard can be made with different assortments separated so that the timber truck may be able to effectively transport the timber pieces to the addressees of the respective assortments.

Two different approaches have until now been used to provide a supply of timber pieces divided into different assortments of said log yard. The first has meant gripping a pile of timber pieces of one assortment through the gripping members of the forwarder and putting down this pile in one part of the load space of the forwarder and then when gripping timber pieces of another assortment putting these down in another part of the load space to keep the different assortments separated from each other in the load space. The other approach used has been to grip a pile of timber pieces of one assortment by means of the gripping assembly and if there are room for more timber pieces in the annular space of the gripping assembly to bring the gripping assembly to another pile and to grip this even in the case of a different assortment of these timber pieces. The whole bundle of gripped timber pieces has thereafter been put down in the load space and the timber pieces has there been sorted to separate the assortments.

### SUMMARY OF THE INVENTION

The object of the present invention is to provide a forwarder of the type described in the introduction that enables a more effective handling of timber pieces divided into different assortments after logging than the approaches described above.

This object is according to the invention obtained by providing such a forwarder which is provided with the features described in the characterizing portion of the appended claim 1.

By providing the gripping assembly with said at least one additional gripping arm in the way according to the invention it becomes possible to, after gripping timber pieces of a first assortment, if there is room for it in the annular space defined by the gripping members, grip an additional bundle or pile of timber pieces even if these would be of a different assortment and then bring the gripped timber pieces to the load space of the forwarder and there sequentially unload the timber pieces of the different assortments on places in the load space intended for them without performing any sorting in the load space. A larger amount of timber pieces may by this be handled in every "crane cycle" and the load space of the forwarder may be filled with timber pieces divided into different assortments in less time than what has been possible until now with a conventional forwarder using any of the approaches mentioned above. At the same time the certainty of the separation of the different assortments is increased. It is noted that the gripping assembly of the forwarder according to the invention naturally may be used to grip timber pieces of the same assortment and bring these to the load space, if desired, or to grip timber pieces that during the logging has been placed in piles containing a mixture of assortments.

According to an embodiment of the invention said at least one additional gripping arm is removable to an inactive position in which it is arranged outside said annular space. With such a removability of said at least one additional gripping arm, which can easily be two or three to the number, this will not at all be in the way and take up space when the gripping assembly is to be used to lift a large collective bundle without sorting need, for example by unloading from the load space of the forwarder or by picking up timber of the same assortment. Accordingly, the gripping ability of the gripping assembly, i.e. how much this can grip at maximum, in such a case will be equal to a corresponding gripping assembly without said at least one additional gripping arm.

According to another embodiment of the invention said at least one additional gripping arm is arranged, as seen in said direction of intended penetration of timber pieces through the annular space, in a position with respect to this direction between ends of said space defined by the gripping members. By such arrangement such additional gripping arms may be built in into the gripping assembly without affecting its outer shape and be protected therein.

According to another embodiment of the invention said at least one additional gripping arm is arranged, as seen in said direction of intended penetration of timber pieces through the annular space, in a position with respect to this direction outside ends of said space defined by the gripping members. Such an arrangement of such additional gripping arms outside said space may in some cases be easy to provide at existing gripping assemblies which later have been equipped with one or more said additional gripping arms in the way according to the invention.

According to another embodiment of the invention the forwarder has only one said additional gripping arm. By having only one suitably dimensioned and shaped additional gripping arm the control of this could be simplified compared to e.g. two additional gripping arms.

According to another embodiment of the invention the forwarder comprises two said additional gripping arms. This enables to easily provide certain gripping of timber pieces within said separate sub-space.

According to another embodiment of the invention said at least one additional gripping arm is divided into a plurality of branches, it is for example fork-like. Such a design of the one or more additional gripping arms may facilitate certain gripping of some types of timber pieces.

According to another embodiment of the invention said at least one additional gripping arm and a gripping member are arranged pivotable about the same axis of the gripping assembly for bringing said additional gripping arm and said gripping member between said gripping and release position. Such an arrangement simplifies the structure of the gripping assembly of the forwarder according to the invention.

According to another embodiment of the invention the forwarder comprises a power member configured to move said at least one additional gripping arm relative to a body of the gripping assembly, and said power member is attached to a rotor plate of the gripping assembly. Such an arrangement of a said power member, for example a hydraulic cylinder, is suitable.

The invention also relates to a method for lifting timber pieces lying in different assortments on the ground and placing them in a load space with the method steps listed in the characterizing portion of the appended method claim. The advantages of performing such a method in relation to such methods already known are clear from the above description of the forwarder according to the invention.

Further advantages as well as advantageous features of the invention will appear from the following description.

### BRIEF DESCRIPTIONS OF THE DRAWINGS

With reference to the appended drawings, below follows a specific description of embodiments of the invention cited as examples.

In the drawings:
- Fig 1a: is a perspective view showing a simplified conventional forwarder,
- Fig 1b: shows how a simplified part of the load space of a known forwarder may look like from behind,
- Fig 2: is a perspective view of the gripping assembly of a forwarder according to a first embodiment of the invention,
- Fig 3: illustrates the gripping assembly of Fig 2 with its additional arms in a gripping position,
- Fig 4: illustrates the gripping assembly of Fig 2 with its additional arms in a holding position,
- Fig 5: illustrates the gripping assembly of Fig 2 with the additional arms in a holding position and the ordinary gripping members in a position ready for gripping,
- Fig 6: illustrates the gripping assembly of Fig 2 with the additional gripping arms and the gripping members in a holding position,
- Fig 7: illustrates the gripping assembly of Fig 2 with the additional gripping arms in a holding position and the gripping members in a releasing position for putting down timber pieces in the load space of the forwarder,
- Fig 8: illustrates the gripping assembly of Fig 2 used for gripping a large collective bundle without sorting need,
- Fig 9: is a view corresponding to Fig 2 illustrating a gripping assembly of a forwarder according to a second embodiment of the invention, and
- Fig 10: illustrates a gripping assembly of a forwarder according to a third embodiment of the invention.

### DETAILED DESCRIPTION OF EMBODIMENTS OF THE INVENTION

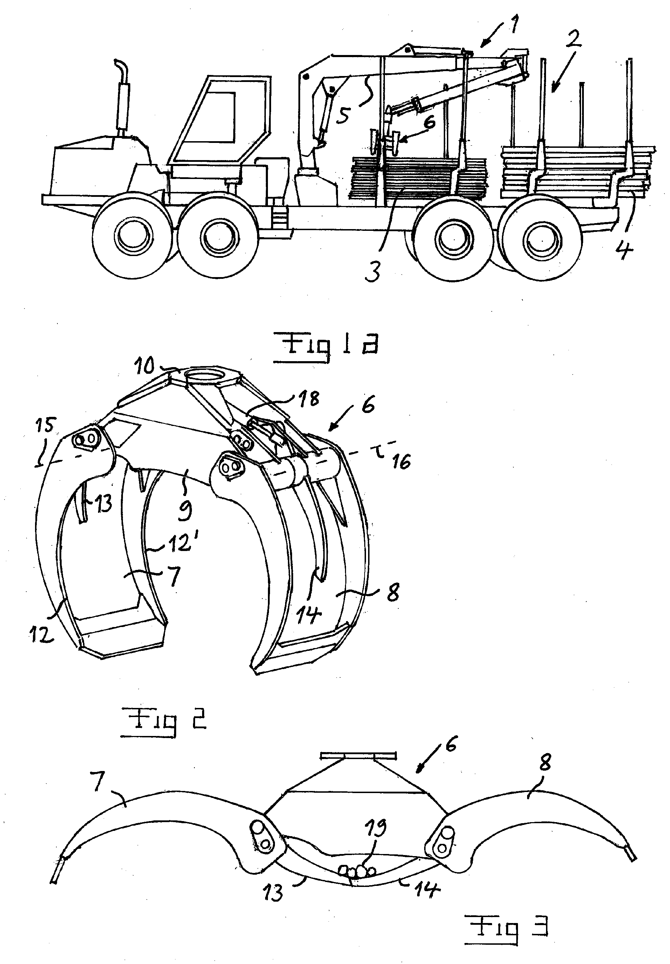

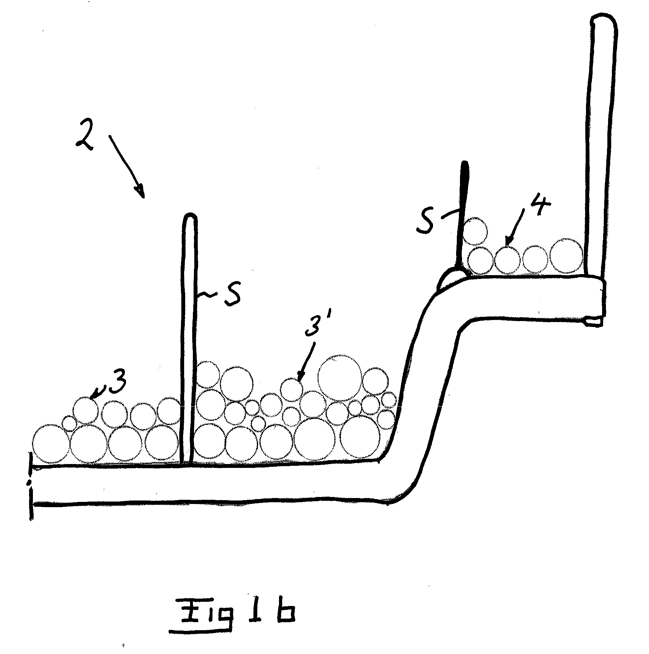

Fig 1a illustrates schematically a conventional forwarder 1 provided with a load space 2 for receiving and transport of timber pieces divided into different assortments. It is indicated that a batch of timber pieces of two different assortments 3, 4 has already been put down in the load space. It is naturally also possible to fill the load space with timber pieces of only one assortment. The forwarder further has a crane 5 with a gripping assembly 6 for lifting timber pieces from the ground and placing them in the load space. The different assortments often consists of random lengths of the same load, i.e. at the same time in the load space, e.g. from 2.7 m to 5.5 m. Fig 1b shows a load space from behind and how separation supports S are used for separating the different assortments 3,3', 4. The forwarder is an off-road vehicle or a forestry machine (it could be included in a combined harvester/forwarder) used for transport off-road, so-called forwarding, of timber pieces from a logging location in trackless terrain to a storage location accessible for a timber truck or other road-going vehicles.

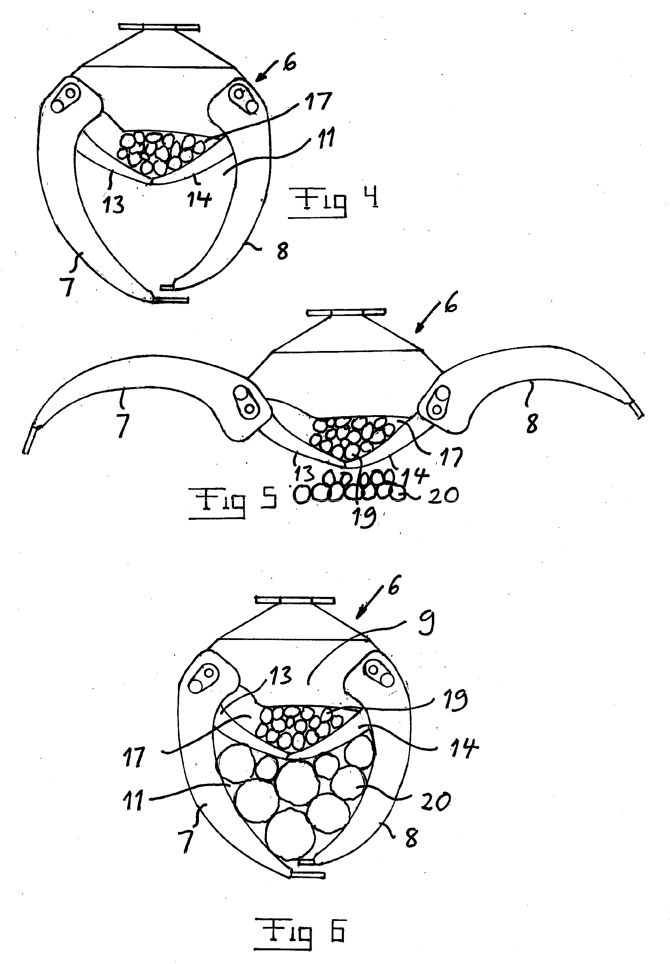

Fig 2 illustrates a simplified gripping assembly of a forwarder according to the invention, wherein such things that are conventional components and have nothing to do with the invention have been omitted for simplicity and clarity. The gripping assembly has two jaw-like gripping members 7, 8, which are pivotally arranged at a body 9 having a rotor plate 10 for rotatable connection between the gripping assembly and the crane of the forwarder. Power members, such as hydraulic cylinders, for causing pivoting of the gripping members have been omitted in the figure. The gripping members are, through pivoting relative to the body 9, movable between a gripping position, in which they together grip around a plurality of timber pieces and define an annular space 11 (see Fig 4) for receiving the timber pieces penetrating therethrough, and a release position in which they open the limitation of the annular space for releasing the timber pieces therefrom.

It appears from Fig 2 that the gripping members define ends 12, 12' of the space 11 at sufficient distance from each other, in the direction of intended penetration of timber pieces through the annular space, so that such timber pieces may be firmly held by the gripping members.

The gripping assembly also has two additional gripping arms 13, 14, which are pivotally arranged at the body 9, in this case about the same pivot axis 15, 16 as a respective gripping member and by pivoting about this pivot axis movable between a gripping position, in which they grip timber pieces and hold these in a separate sub-space 17 (see Fig 4) positioned within the annular space 11 delimited by the gripping members, and a release position in which they open the separate sub-space for releasing timber pieces therefrom. It is indicated how a power member 18 in the form of a hydraulic cylinder could be arranged between the rotor plate 10 and a gripping arm 14 for causing the gripping arms to pivot relative to the body 9 of the gripping assembly.

The operation of a forwarder according to the invention provided with the gripping assembly just described is now to be explained with reference to Figs 3-8. At a logging location, timber pieces may lay on the ground divided into piles with timber pieces of the same assortment, such as spruce timber, pinewood timber, softwood pulp, birch pulp and fuelwood, in the same pile. When the forwarder through its crane and gripping assembly is about to place such timber pieces in its load space, the gripping members 7, 8 are pivoted from each other, as is shown in Fig 3, and the gripping assembly is lowered towards the ground so that the additional gripping arms 13, 14 reach around a pile of timber pieces 19 of a first assortment, whereupon the gripping arms 13, 14 are brought to the gripping position shown in Fig 4 for gripping the timber pieces 19 and holding these in the sub-space 17 defined by the gripping arms 13, 14 and the body 9 of the gripping assembly.

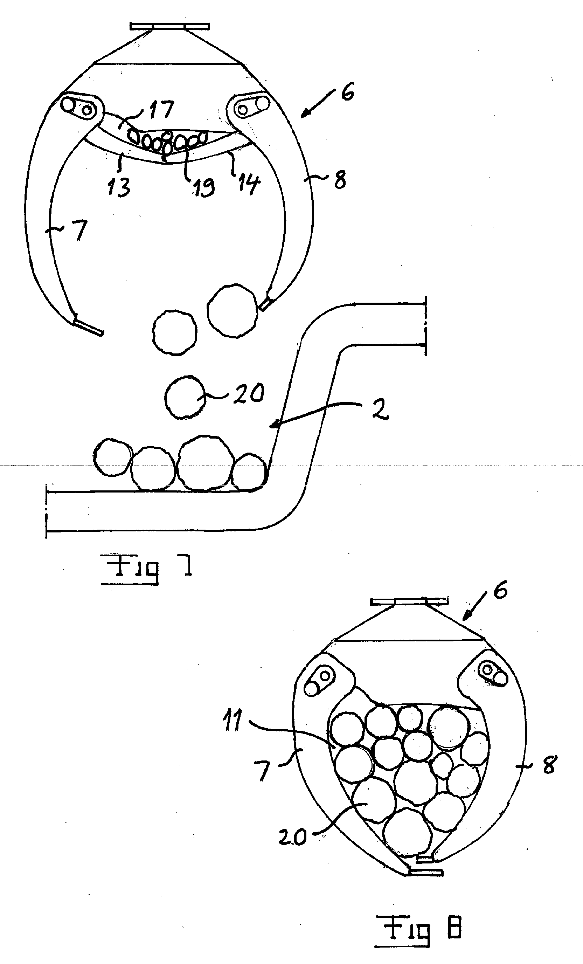

The gripping assembly is then, through the crane, moved to a pile with timber pieces 20 of a second assortment and is lowered down so that the gripping members 7, 8 enclose the pile and then can be brought to the gripping position, as is shown in Fig 5, for gripping the timber pieces of the second assortment while simultaneously holding the timber pieces of the first assortment through the gripping arms 13, 14. Fig 6 shows how timber pieces of both separate assortments are held separated from each other by the gripping assembly for being brought to the load space. Fig 7 illustrates how the timber pieces of every assortment may be put down separately in the load space by firstly bringing the gripping members 7, 8 to their release position to put down the timber pieces 20 of the second assortment on a place in the load space 2 while holding the timber pieces 19 of the first assortment in the sub-space 17 of the gripping assembly. The gripping assembly is then brought to a place to put down timber pieces of the first assortment and the additional gripping arms are there brought to the release position to separately put down those timber pieces.

In the embodiment of the gripping assembly shown in Fig 2 both additional gripping arms 13, 14 are removable to an inactive position in which they are arranged outside the annular space 11, so as to not be in the way and take up space when it is desired to grip and lift a large collective bundle without sorting need, for example by unloading from the load space of the forwarder or by picking up timber of one assortment, as is illustrated in Fig 8.

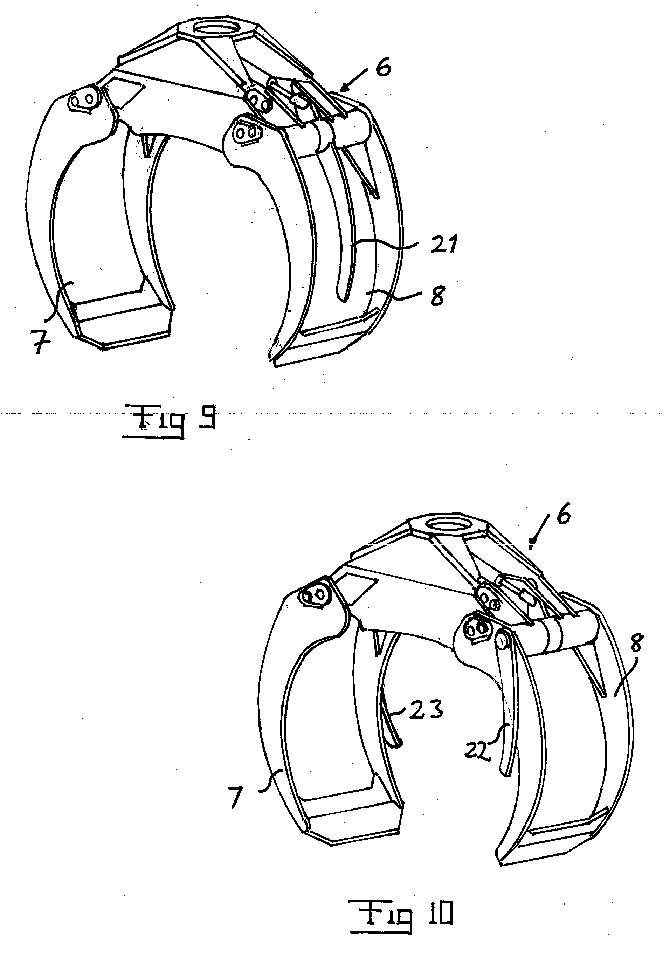

Fig 9 illustrates how the gripping assembly of a forwarder according to a second embodiment of the invention has only one additional gripping arm, and in such a case this is made longer than the additional gripping arms of the embodiment of Fig 2 and is designed in such a way that it may be operated to grip and hold timber pieces in a said sub-space by means of other parts of the gripping assembly, such as the body.

Fig 10 illustrates how additional gripping arms 22, 23 of a forwarder according to a third embodiment of the invention may be arranged outside the ends, 12 and 12'respectively, of the annular space defined by the gripping members 7, 8. This is a placement of the additional gripping arms that may be suitable for certain types of gripping assemblies.

The invention is of course not in any way restricted to the embodiments thereof described above, but many possibilities to modifications thereof will be apparent to a person with ordinary skill in the art without departing from the scope of the invention as defined in the appended claims.

The phrase "annular space" refers to a space defined by elements, such as gripping members and a body, for enclosing a bundle of timber pieces. The space may be of arbitrary cross-section-design and may even be slightly open as long as timber pieces held therein are not falling therefrom.

## Claims

1. A forwarder comprising
• a load space (2) for receiving and transport of timber pieces divided into different assortments, and
• a crane (5) with a gripping assembly (6) for lifting timber pieces from the ground and placing them in the load space, the gripping assembly having gripping members (7, 8) movable between a gripping position, in which they together grip around a plurality of timber pieces and define an annular space (11) for receiving the timber pieces penetrating therethrough, and a release position in which they open the limitation of the annular space for releasing the timber pieces therefrom,
**characterized in that** the gripping assembly has at least one additional gripping arm (13, 14, 21-23) movable between a gripping position, in which it grips timber pieces and holds these in a separate sub-space (17) positioned within said annular space (11) delimited by the gripping members (7, 8), and a release position in which it opens the separate sub-space for releasing timber pieces therefrom, and that the gripping assembly is configured controllable to, when gripping timber pieces, firstly grip timber pieces (19) of a first assortment by moving said at least one additional gripping arm (13, 14, 21-23) to its gripping position and then grip timber pieces (20) of a second assortment by moving said gripping members (7, 8) to their gripping position while holding the timber pieces of the first assortment in said separate sub-space and to, when placing the timber pieces in the load space (2), firstly move said gripping members (7, 8) to their release position and then said at least one additional gripping arm to its release position for separate unloading of the timber pieces of different assortments in the load space.

2. A forwarder according to claim 1, **characterized in that** said at least one additional gripping arm (13, 14, 21-23) is removable to an inactive position in which it is arranged outside said annular space (11).

3. A forwarder according to claim 1 or 2, **characterized in that** said at least one additional gripping arm (13, 14, 21) is arranged, as seen in said direction of intended penetration of timber pieces through the annular space (11), in a position with respect to this direction between ends (12, 12') of said space defined by the gripping members (7, 8).

4. A forwarder according to claim 1 or 2, **characterized in that** said at least one additional gripping arm (13, 14, 21) is arranged, as seen in said direction of intended penetration of timber pieces through the annular space (11), in a position with respect to this direction outside ends of said space (12, 12') defined by the gripping members (7, 8).

5. A forwarder according to any of the preceding claims, **characterized in that** it has only one said additional gripping arm (21).

6. A forwarder according to any of the claims 1-4, **characterized in that** it comprises two said additional gripping arms (13, 14, 22, 23).

7. A forwarder according to any of the preceding claims, **characterized in that** said at least one additional gripping arm is divided into a plurality of branches, it is for example fork-like.

8. A forwarder according to any of the preceding claims, **characterized in that** said at least one additional gripping arm (13, 14, 21-23) and a gripping member (7, 8) are arranged pivotable about the same axis (15, 16) of the gripping assembly for bringing said additional gripping arm and said gripping member between said gripping and release position.

9. A forwarder according to any of the preceding claims, **characterized in that** it comprises a power member (18) configured to move said at least one additional gripping arm (14) relative to a body (9) of the gripping assembly (6), and that said power member is attached to a rotor plate (10) of the gripping assembly.

10. A method for lifting timber pieces lying in different assortments on the ground and placing them in a load space (2), **characterized in that** it comprises the following steps:
a) gripping timber pieces (19) of a first assortment through at least one gripping arm (13, 14, 21-23) of a gripping assembly (6),
b) gripping timber pieces (20) of a second assortment by gripping members (7, 8) of the gripping assembly while holding the timber pieces gripped by said gripping arm in the gripping assembly,
c) moving the gripping assembly (6) to the load space (2),
d) releasing the timber pieces (20) of said second assortment from the gripping members (7, 8) for unloading thereof in the load space (2), and
e) releasing the timber pieces (19) of said first assortment gripped by said gripping arm (13, 14, 21-23) for unloading thereof in the load space.
